Europäisches Patentamt

European Patent Office

Office européen des brevets

(11) Publication number: **0 045 756**
**B1**

## (12) EUROPEAN PATENT SPECIFICATION

(45) Date of publication of patent specification: **30.10.85**

(21) Application number: **81900426.8**

(22) Date of filing: **19.02.81**

(86) International application number:
**PCT/AU81/00019**

(87) International publication number:
**WO 81/02495 03.09.81 Gazette 81/21**

(51) Int. Cl.⁴: **H 02 B 9/00, H 02 B 1/10,
H 02 G 3/18**

(54) **MULTIPLE SERVICE UNIT.**

(30) Priority: **19.02.80 AU 2443/80
07.11.80 US 204830**

(43) Date of publication of application:
**17.02.82 Bulletin 82/07**

(45) Publication of the grant of the patent:
**30.10.85 Bulletin 85/44**

(84) Designated Contracting States:
**CH DE FR GB LI NL SE**

(56) References cited:
**EP-B-0 006 984
DE-B-1 169 544
US-A-3 341 268
US-A-3 450 951
US-A-3 502 785
US-A-3 585 456
US-A-3 614 538
US-A-3 716 762
US-A-3 753 047
US-A-3 753 049
US-A-3 800 063
US-A-3 891 899
US-A-4 025 825**

(73) Proprietor: **JENELEC INDUSTRIES PTY. LTD.
T.A.A. Building, Cavill Avenue
Surfers Paradise, Qld. 4217 (AU)**

(72) Inventor: **JENSEN, Henning
T.A.A. Building Cavill Avenue
Surfers Paradise, Qld. 4217 (AU)**

(74) Representative: **Boon, Graham Anthony et al
Elkington and Fife High Holborn House 52/54
High Holborn
London, WC1V 6SH (GB)**

Courier Press, Leamington Spa, England.

## Description

This invention relates to a multi-functional service unit for trailer parks, camping areas, marinas, jetties, wharves and like installations as well as building sites.

In such trailer parks, marinas, building sites and the like, essential services comprising water, electrical power and lighting are frequently provided as separate systems. The resultant combination of hoses, pipes, cable and supports is inconvenient in use, expensive to install and maintain and is usually unsightly in appearance. In order to alleviate such problems, it has previously been proposed to provide a service unit comprising a number of electrical power outlets and a power consumption meter in a single box or separate boxes on a support pole. Electrical wiring may be provided to the boxes via a conduit attached to the exterior of the pole or via the hollow space within a tubular pole. A water pipe with tap affixed may also be attached to the exterior of the support pole if required. In one type of prior art service unit, a power outlet box, a meter box, a water pipe and appropriate connecting conduits are integrally cast within a shaped concrete structure.

Of the prior art service units previously available most have been designed to suit a particular location in a campsite, trailer park, building site etc. and to provide a very limited number of services. Such service units are usually expensive to install and extremely difficult to maintain. Apart from the possibility of mounting additional boxes to the post-mounted service unit, none of the prior art units has contemplated a device which combines the features of ease of installation, ease of maintenance and the flexibility to accommodate a wide range of service functions within a simple, inexpensive and aesthetically acceptable structure.

A further difficulty associated with the prior art service unit installations is that normally only three power outlets are permitted on one power circuit, with the fuses located at a main switchboard centre remote from the service unit. This makes it very difficult to locate the correct fuse for a faulty power outlet. In addition, it is difficult to provide effective safety circuits for such outlets e.g. if the electrical insulation is damaged or water enters the outlet. Similarly, all the lights for a campsite, trailer park, marina, building site or the like normally share a common fuse, so that in the case of a single power circuit fault, or if the fuse blows, the whole area is blacked out until the faulty circuit or fuse is repaired.

A number of further difficulties appear to have been inherent in prior art service units in that they are prone to damage by vandals or by impact from vehicles or marine vessels. Many of the prior art devices have exposed power meters, switches, power distribution outlets and lights which may be easily damaged by vandals and many have exposed mounting bolts, screws and the like which permit unauthorized tampering. A particular disadvantage associated with prior art units is the manner in which they are mounted to a ground surface, jetty, marina pontoon or the like. Most devices are rigidly mounted to a base by bolting or by casting in a concrete base. In the event that a vehicle or marine vessel accidentally contacts such a rigidly mounted service unit, the unit itself may be severely damaged or if mounted on a jetty or marina pontoon, the jetty or pontoon may suffer damage of a most expensive nature. As in most prior art units, the power and water conduits are rigidly mounted to the service unit, impact damage by a vessel or vehicle may cause the power and water supply conduits to be severed thus creating a grossly unsafe condition.

US—A—3753047 (Shallbetter) discloses a services unit for provided electrical power, comprising a hollow body mounted in a vertical stand pipe, power distribution means for distributing electrical power from a power conduit to a plurality of electric power receptacles an electrical meter for measuring the energy consumed through the power receptacles, and an opening in the hollow body through which the receptacles are accessible and which is closable by a lockable door. It is to be noted that if the unit is used by a plurality of users there is no way in which the power consumed by each can be separately measured, and no way in which one user can be prevented from disconnecting a plug inserted in a receptacle by another user.

The present invention has been conceived with the aim of alleviating the above mentioned problems and to provide a simple and inexpensive service unit, capable of providing a wide range of services and at the same time providing an easily maintainable unit suitable to any location requiring a service unit of this type. A particular advantage of service units according to the invention is that access to power distribution outlets and other services may be strictly controlled by the provision of lockable covers. The covers serve a dual function in that not only do they prevent unauthorized consumption of services provided, but the covers may also be adapted to prevent accidental or deliberate disconnection or removal of service connection such as power leads, telephone cables etc. To this end the lockable covers may be provided with apertures, preferably on the lower peripheral edge, the apertures being dimensioned such as to permit the cover to be locked while the service leads, cords, cables etc. are connected to the service unit. Additionally, the inner face of the lockable covers may be adapted to engage the plugs of the service connections such that when the cover is locked it is not possible to remove the plug from its corresponding socket by applying tension to the service lead, cord, cable etc.

According to the invention there is provided a service unit for controlled distribution through individually lockable doors, and for individual metering, of electrical services to a plurality of authorized users comprising:

a hollow body adapted to be mounted on a surface by a mounting means;

power distribution means for distributing electrical power from a power conduit connected thereto to a plurality of electric power receptacles;

a plurality of electrical meters for measuring the energy consumed through the electrical power receptacles by each authorized user;

said meters being readable from outside the body;

said electric power receptacles, said power distribution means and said electric meters being located entirely within said hollow body;

a plurality of openings in said hollow body, each opening being associated with at least one electrical power receptacle, each receptacle being accessible through an opening;

lockable access door means for lockably securing each opening, at least one of the access door means being openable only by an authorized user, so that the user has access through said door to at least one electrical power receptacle located therebehind.

Preferably the releasably securable covers are adapted to prevent, in use, removal or disconnection of a service connection.

Preferably the service unit comprises frangible mounting means.

Preferably the frangible mounting means comprises an essentially hollow, walled mounting base with inwardly extending mounting lugs adjacent its upper edges. Some of the lugs may be adapted for connection to corresponding mounting lugs or a mounting plate formed in the base portion of the body and additional lugs are provided for mounting the service unit to a base. Certain of the lugs are adapted by dimension, to preferentially fracture in the event of impact. The frangible base may also be provided with a plurality of apertures to permit ingress of ventilating air or egress of water in the event of flooding. Alternatively, the frangible mounting means may comprise frangible mounting bolts or the like. Such bolts may be formed from relatively low tensile materials, for example nylon, aluminium, brass or like materials.

Associated with each meter there may be a circuit breaker and an indicator means to indicate a tripped circuit breaker.

Preferably a lighting means is provided, and this preferably comprises an incandescent or fluorescent light mounted adjacent the upper part of the body. Depending on the location of the service unit, i.e. at a campsite, trailer park, marina, wharf, jetty or the like, the lighting means may be provided with a suitable diffuser means or reflector means.

Preferably the lighting means is provided in the top or cap portion of the service unit and is adapted to provide downwardly directed diffuse light about all or a portion of the service unit. The lighting means may also be adapted to provide interior lighting for the service unit. Additionally or alternatively, the lighting means may comprise an exterior light mounted atop the service unit.

Site identification means such as an illuminated number or other indiciae may also be incorporated in the exterior light diffuser as well as appropriately coloured segments for night-time marine navigation purposes if applicable.

The lighting means may additionally or alternatively comprise a "foot-light" mounted adjacent the lower part of the body and may be downwardly directed by, for example, mounting the light behind a louvred cover plate. The lighting means of the service unit is preferably connected in a circuit with a circuit breaker and an indicator to indicate a tripped circuit breaker. In an alternative embodiment of the invention, the lighting means may be actuable by a light-sensitive switching means.

In a most preferred arrangement, the lighting means is mounted within the top or cap portion of the service unit, the top or cap portion being adapted to extend beyond the walls of the unit to form an outwardly extending rim. The rim may act as a protective cover for the lighting means and permit the light to be directed downwardly as required.

Apertures are arranged in the body to permit ease of installation of the various service components and also to permit ease of access for maintenance purposes. The aperture covers may be releasably secured to the body by any suitable means such as screws, bolts or the like and are preferably of the type which discourage unauthorized tampering or removal.

Preferably, the service components are mounted on a frame which may be withdrawn from the top of the service unit to permit replacement or maintenance of the service components.

The body of the service unit may be constructed from any suitable material, preferably of a noncorrosive and generally maintenance free material such as aluminum, plastics etc.

The body may for example be fabricated from sheet material, cast, moulded or extruded to the required shape and dimensions. Suitable materials for forming the body may comprise aluminum and its alloys, polyethylene, polypropylene, polybutylene, nylon, rigid PVC, polyesters, epoxies, polyurethanes and the like or fibreglass reinforced synthetic resins.

The aperture covers may be formed from the same material as the body of the service unit, or if appropriate may comprise a transparent material such as glass or acrylic compounds to permit visual inspection of electric power meters to determine power consumption or to permit inspection of other service components for maintenance purposes.

Most preferably the body may be formed from cast aluminum or moulded plastics material and comprises a cap portion, a walled portion and a base portion. The cap, wall and base portions may be suitably connected by welding, gluing, rivetting, bolting, screwing etc.

A wide range of additional services may be connected to the service unit according to the invention. Such additional services may include:—

telephone;

communications antennae connections of various impedances;

battery charging facilities of various voltages e.g. 6V, 12V, 24V, 32V;

intercom;

piped music, news, weather reports;

an air blower adapted on an outlet side to provide via a suitable hose or conduit a source of heated air for use in cold climates to heat tents, trailers, boats vehicle engines etc. and optionally adapted to provide on an inlet side air suction suitable for vacuum cleaning purposes;

fire extinguisher and/or a retractable fire hose (connected, if desired to a source of water, $CO_2$, foam etc), mounted on the side walls or within the body; LNG, LPG or town gas and a metering device and suitable connections therefor; a battery charger mounted in the body and having an outlet protected by a lockable weatherproof cover.

The aperture covers are preferably hingedly mounted on the body and secured by a key-operated locking means. Such lockable covers are weatherproof and permit authorized access to the service outlet connections. Optionally, other apertures closed by aperture covers are provided to permit access to components for maintenance purposes.

Hooks for the storage of hoses or other items can also be provided on the side walls of the housing and a lockable storage cabinet can also be provided within the body.

To enable the invention to be fully understood, various embodiments of the invention will now be described with reference to the accompanying drawings in which:

Fig. 1 is a sectional view of one embodiment of the invention.

Fig. 2 illustrates a modified form of the invention incorporating a support standard for a power distribution lead.

Fig. 3 illustrates a removable frame which may be used in an embodiment of the invention.

Fig. 4 is a top plan view of a base portion of the body of a most preferred embodiment.

Fig. 5 is a cross-sectional view of the base portion of Fig. 4 along the line A—A.

Fig. 6 is a top plan view of one embodiment of a frangible base according to the invention.

Fig. 7 and 8 are cross-sectional views of the base of Fig. 6 along the lines B—B and C—C respectively.

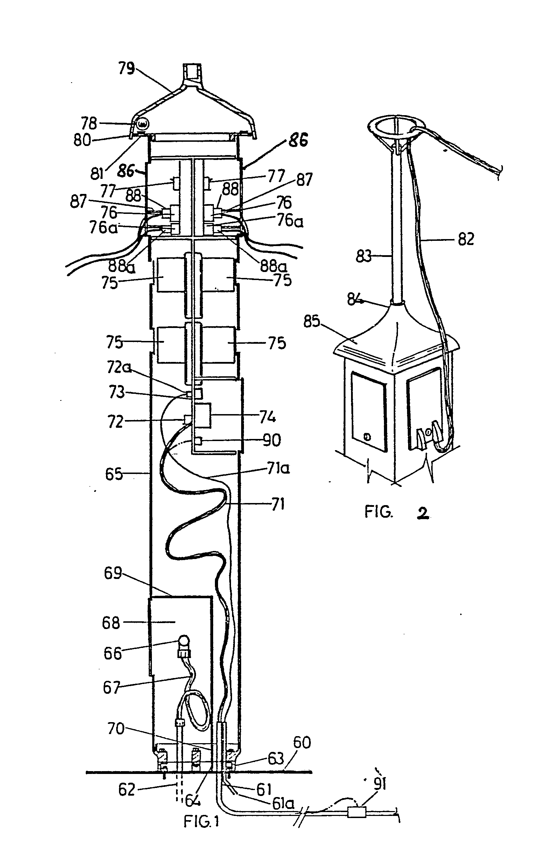

Fig. 1 illustrates a particularly preferred embodiment of a service unit according to the invention and its manner of installation. A base surface 60 which may comprise a cast concrete base set into the ground surface of a campsite or on a jetty, marina pontoon or the like or other suitable surface may be provided with suitably positioned service conduits such as electrical and communications conduit(s) 61 and 61a respectively and/or water conduit 62, extending for a short distance from the surface 60. A frangible base 63 is then mounted for example by bolting to the surface 60 such that the power communications and water conduits are separated by flange 64. A service unit 65, pre-assembled with the required range of services is then bolted to the base 63 via the frangible lugs thereon. Water faucets 66 are then suitably connected via a T-piece and a flexible hose 67 to water conduit 62, the faucets 66 each having outlets to enable connection to water hoses. An access cover is provided in the rear wall of the body to enable access to the water pipes. Chamber 68 is formed by partition 69, corresponding base portion flange 70 and frangible base flange 64 to isolate the electrical and communications components in the event of a burst water pipe between the faucets 66 and the conduit 62. Excess lengths of power and communications cables 71 are then connected to junction boxes 72 and 72a respectively, mounted on component mounting frame 73. In the embodiment illustrated are circuit breakers 74, circuit breaker reset means 90 to permit resetting of the circuit breakers, energy meters (Watt hour meters) 75, power distribution sockets 76, communications sockets 76a and power switches 77. The inward face of lockable covers 86 is provided with abutments 87 which, when covers 86 are locked, engage power plugs 88 and communications plugs 88a to retain them in their respective sockets. Leads connected to the plugs 88 and 88a emerge from the body via loaded apertures. These can be seen more clearly in Fig. 2. A lamp 78 may be mounted within the cap 79 in the peripheral rim portion 80 extending beyond the wall of the service unit body. The lamp may be protected from weather or unauthorized tampering by a transparent or translucent diffuser 81 extending between rim 80 and the unit body. One or more lamps may be provided in the rim portion around the periphery of the body depending on particular requirements. The lamp is positioned to permit simultaneous illumination of the interior of the service unit for in situ maintenance and to permit meter reading.

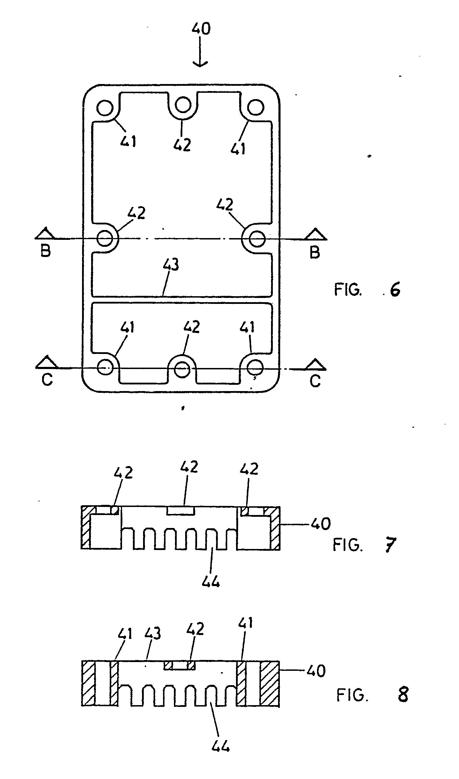

In the event that a service unit such as that illustrated in Fig. 2 suffers heavy impact from a motor vehicle or a marine vessel, the frangible lugs 42 (shown in Fig. 6 and described further below) are severed, permitting the service unit to fall on one side suffering little if any damage to the body or the service components contained therein. The flexible water, electrical and communications couplings permit the unit to fall in the manner described without damaging the couplings and permit the unit to continue functioning without interrupting service or creating an unsafe condition due to exposed electrical conductors and gushing water. As a further safety feature, a mercury switch or the like may be fitted to the interior of the service unit and connected to remotely located isolating relay 91. In the event that a service unit is knocked over on impact, the isolating relay is activated to isolate the unit from the main power supply. Restoration of the service unit to its former state is simply and inexpensively, achieved by replacing base portion 40 (shown in Fig. 6).

Fig. 2 illustrates an optional feature of the invention whereby a power lead 82 may be supported by a standard 83 in a socket 84 formed in the cap 85 of the service unit. Such a feature would be particularly beneficial in a congested situation where many power and/or other leads are deployed to a number of users in, say, a trailer park or on a work site.

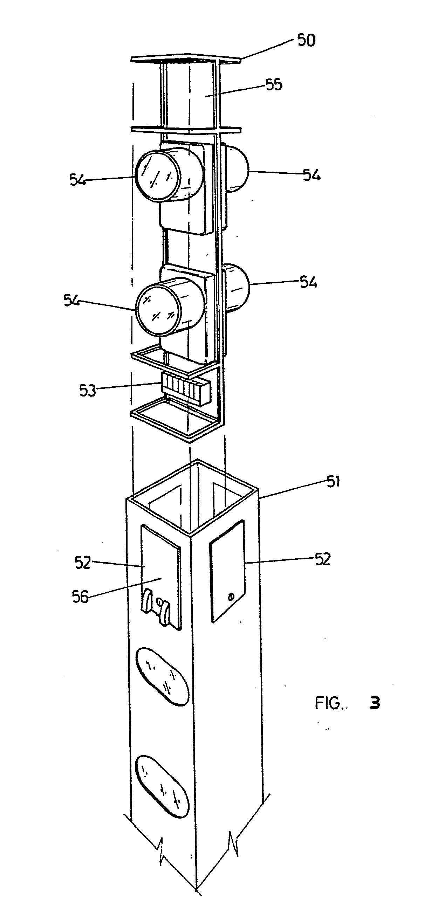

Fig. 3 illustrates an embodiment of the invention wherein certain of the service components, particularly the electrical components are mounted on a removable frame which is adapted to be secured within the body 51 by for example screws mounted in flanges (not shown) about the inner periphery of the access apertures 52. Components such as circuit breakers 53, power meters 54 and other components (not shown) may be suitably arranged on the frame to suit the particular requirements of the service unit. Only certain of the components have been illustrated for the sake of simplicity but it will be readily obvious that power distribution sockets, switches, reset devices, etc. would be mounted in the region 55 to correspond with access cover 56. A junction box (not shown) may be provided for example at the rear of the circuit breakers 53 for connection of the primary electrical power.

Fig. 4 illustrates a cast base portion 30 incorporating mounting lugs 31 and a separating flange 32, the purpose of which will be described later.

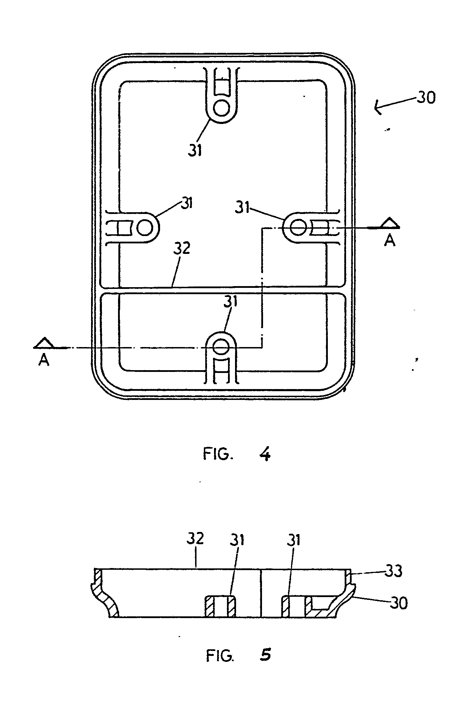

Fig. 5 illustrates a cross-section of the base portion of Fig. 4 along the line A—A. A stepped rim 33 is provided to engage with the body of the service unit.

Fig. 6 illustrates one embodiment of a frangible base which can be used in the invention. The base 40 is preferably cast in aluminium and includes lugs 41 for mounting to a supporting surface. Frangible lugs 42 are provided to correspond with the base portion of the service unit to permit mounting thereto. The lugs are suitably dimensioned to permit breakage from the base 40 when a service unit mounted thereto is subjected to impact but the lugs are sufficiently sturdy to otherwise support the service unit for normal use.

A separating flange 43 is provided to correspond with flange 32 of base portion 30 in Fig. 4.

Figures 7 and 8 illustrate cross-sections along the lines B—B and C—C respectively of Fig. 6. Apertures 44 may be provided about the lower periphery of base 40 as well as the lower part of flange 43 to permit ingress of ventilating air and/or egress of water in the event of flooding.

As will be readily apparent, the unit described provides a strong, compact and aesthetically pleasing service unit which can provide a plurality of essential and optional services for one or more consumers at a campsite, trailer park, jetty, marina, wharf or the like or a building site.

## Claims

1. A service unit for controlled distribution through individually lockable doors, and for individual metering, of electrical services to a plurality of authorized users comprising:

a hollow body adapted to be mounted on a surface by a mounting means;

power distribution means (71, 72) for distributing electrical power from a power conduit (61) connected thereto to a plurality of electric power receptacles (76);

a plurality of electrical meters (75) for measuring the energy consumed through the electrical power receptacles by each authorized user,

said meters (75) being readable from outside the body; said electric power receptacles (76), said power distribution means (71, 72), and said electric meters (75) being located entirely within said hollow body;

a plurality of openings in said hollow body, each opening being associated with at least one electrical power receptacle, each receptacle being accessible through an opening;

lockable access door means (86) for lockably securing each opening, at least one of the access door means being openable only by an authorized user, so that the user has access through said door to at least one electrical power receptacle located therebehind.

2. A service unit as claimed in claim 1, wherein said lockable access door means (86) for lockably securing each aperture means when locked prevents electrical disconnection of an electrical conduit connected to said electric power outlet (76).

3. A service unit as claimed in claim 1, wherein said lockable access door means (86) for lockably securing said aperture means, when in a secured position, prevents removal from the service unit of an electric power cord connected to the electrical outlet.

4. A service unit as claimed in any preceding claim, including a plurality of service outlet means (76a) for distributing additional services from service sources (61a) to removable service conduits connectable to and disconnectable from said service outlet means (76a), said service outlet means (76a) being located entirely within said hollow body and accessible by said lockable access door means by authorized users.

5. A service unit as claimed in any preceding claim, including a removable frame located within said hollow body, said power distribution means and said electric meters being mounted on said frame and removable therewith.

6. A service unit as claimed in claim 5, wherein said service unit includes cap means (79) for enclosing the top of said hollow body, said cap means (79) being removable from said hollow body, said frame being removable through an opening formed in said hollow body when said cap is removed.

7. A service unit as claimed in claim 5 or 6, wherein the frame further carries the electric power receptables and circuit breakers.

8. A service unit as claimed in any preceding claim, including transparent windows in the hollow body, the meters being readable through said windows.

9. A service unit as claimed in any preceding claim, wherein said mounting means comprises frangible mounting means.

10. A service unit as claimed in claim 9, wherein said frangible mounting means (63) comprises a mounting base with frangible lugs (42).

11. A service unit as claimed in claim 9, wherein said frangible mounting means comprises frangible mounting bolts.

12. A service unit as claimed in any preceding claim wherein said lockable access door means (86) includes a key-operated lock.

13. A service unit as claimed in any preceding claim, wherein a plurality of electric power outlets are located behind each of said lockable access door means (86).

14. A service unit as claimed in any preceding claim, further including at least one water outlet tap (66) mounted on the exterior of said hollow body and connected to a water supply duct (62) extending into said hollow body from an external water supply.

15. A service unit as claimed in any preceding claim, further including lighting means (78) mounted within the upper portion of said hollow body for providing light directed substantially downwardly to provide for external illumination and illumination of the interior of said service unit.

16. A service unit as claimed in any preceding claim, wherein said unit provides both electrical services and at least one other service selected from the group consisting of telephone service and communications antenna service.

17. A service unit as claimed in any preceding claim, further including coin-operated means for controlling at least one service distributed through said service unit by the provision of coins to said coin-operated means.

**Revendications**

1. Unité de services, pour la distribution contrôlée, à travers des portes verrouillables individuellement, et pour la mesure individuelle, de services électriques à une pluralité d'usagers autorisés, comprenant:

— un corps creux adapté pour être monté sur une surface par des moyens de montage,

— des moyens de distribution de courant (71, 72) pour distribuer du courant électrique à partir d'une canalisation électrique (61) reliée à ces moyens, dans une pluralité de prises de courant électrique (76),

— une pluralité de compteurs électriques (75) pour mesurer l'énergie consommée par l'intermédiaire des prises de courant électrique par chaque usager autorisé,

— lesdits compteurs (75) pouvant être lus depuis l'extérieur du corps,

— lesdites prises de courant électrique (76), lesdits moyens de distribution de courant (71, 72) et lesdits compteurs électriques (75) étant disposés entièrement à l'intérieur dudit corps creux,

— une pluralité d'ouvertures ménagées dans ledit corps creux, chaque ouverture étant associée à au moins une prise de courant électrique, chaque prise étant accessible à travers une ouverture,

— des moyens formant portes d'accès verrouillables (86) pour fermer de manière verrouillable chaque ouverture, au moins un des moyens formant porte d'accès ne pouvant être ouvert que par un usager autorisé, de sorte que l'usager a accès à travers ladite porte à au moins une prise de courant électrique disposée derrière celle-ci.

2. Unité de services telle que revendiquée dans la revendication 1, dans laquelle ledit moyen formant porte d'accès verrouillable (86) servant à fermer de manière verrouillable chaque moyen formant ouverture empêche, lorsqu'il est verrouillé, un débranchement électrique d'une canalisation électrique reliée à ladite prise de courant électrique (76).

3. Unité de services telle que revendiquée dans la revendication 1, dans laquelle lesdits moyens formant porte d'accès verrouillable (86) permettant de fermer de manière verrouillable lesdits moyens formant ouvertures empêchent, lorsqu'ils sont dans une position fermée, d'enlever de l'unité de services, un câble électrique relié à une prise électrique.

4. Unité de services telle que revendiquée dans n'importe quelle revendication précédente, comprenant une pluralité de moyens de sortie de service (76a) destinés à distribuer des services supplémentaires à partir de sources de services (61a) vers des conduites de service amovibles pouvant être branchées et débranchées par rapport auxdits moyens de sortie de service (76a), lesdits moyens de sortie de services (76a) étant disposés entièrement à l'intérieur dudit corps creux et accessibles par lesdits moyens formant porte d'accès verrouillable de la part d'usagers autorisés.

5. Unité de services telle que revendiquée dans n'importe quelle revendication précédente, comprenant un châssis amovible disposé à l'intérieur dudit corps creux, lesdits moyens de distribution de courant et lesdits compteurs électriques étant montés sur ledit châssis et amovibles avec celui-ci.

6. Unité de services telle que revendiquée dans la revendication 5, dans laquelle ladite unité de service comprend des moyens formant chapeau (79) pour fermer la partie supérieure dudit corps creux, lesdits moyens formant chapeau (79) étant amovibles par rapport audit corps creux, ledit châssis étant amovible à travers une ouverture ménagée dans ledit corps creux lorsque ledit chapeau est ôté.

7. Unité de services telle que revendiquée dans la revendication 5 ou 6, dans laquelle le châssis porte, en outre, les prises de courant électrique et des disjoncteurs.

8. Unité de services telle que revendiquée dans n'importe quelle revendication précédente, comprenant des fenêtres transparentes dans le corps creux, les compteurs pouvant être lus à travers lesdites fenêtres.

9. Unité de services telle que revendiquée dans n'importe quelle revendication précédente, dans laquelle lesdits moyens de montage comprennent des moyens de montage pouvant être rompus.

10. Unité de services telle que revendiquée dans la revendication 9, dans laquelle lesdits moyens de montage pouvant être rompus (63) comprennent une base de montage comportant des pattes pouvant être rompues (42).

11. Unité de services telle que revendiquée dans la revendication 9, dans laquelle lesdits moyens de montage pouvant être rompus comprennent des boulons de montage pouvant être rompus.

12. Unité de services telle que revendiquée dans n'importe quelle revendication précédente, dans laquelle lesdits moyens formant porte d'accès verrouillable (86) comprennent une serrure à manoeuvre par clé.

13. Unité de services telle que revendiquée dans n'importe quelle revendication précédente, dans laquelle une pluralité de prises de courant électrique sont disposées derrière chacun des moyens formant porte d'accès verrouillable (86).

14. Unité de services telle que revendiquée dans n'importe quelle revendication précédente, comprenant, en outre, au moins un robinet de sortie d'eau (66) monté sur l'extérieur dudit corps creux et relié à une conduite d'alimentation d'eau (62) s'étendant dans ledit corps creux à partir d'une alimentation d'eau extérieure.

15. Unité de services telle que revendiquée dans n'importe quelle revendication précédente, comprenant, en outre, des moyens d'éclairage (78) montés à l'intérieur de la partie supérieure dudit corps creux pour fournir de la lumière dirigée sensiblement vers le bas afin de fournir un éclairage extérieur et un éclairage de l'intérieur de l'unité de services.

16. Unité de services telle que revendiquée dans n'importe quelle revendication précédente, dans laquelle ladite unité fournit à la fois des services électriques et au moins un autre service choisi dans le groupe constitué par le service téléphonique et le service d'antennes de communications.

17. Unité de services telle que revendiquée dans n'importe quelle revendication précédente, comprenant, en outre, des moyens à commande par pièce de monnaie destinés à contrôler au moins un service distribué par l'intermédiaire de ladite unité de services en fournissant des pièces de monnaie auxdits moyens à manoeuvre par pièce de monnaie.

**Patentansprüche**

1. Versorgungseinheit zum kontrollierten Verteilen elektrischer Versorgungen zu einer Mehrzahl von autorisierten Benutzern und zum individuellen Messen, gekennzeichnet durch einen hohlen Körper, der durch ein Anbringungsmittel an einer Oberfläche angebracht werden kann; durch Energie-Verteilungsmittel (71, 72) zum Verteilen elektrischer Energie von einer hiermit verbundenen Energieleitung (61) zu einer Mehrzahl von Steckdosen (76) für elektrische Energie; durch eine Mehrzahl von elektrischen Meßgeräten (75) zum Messen der über die Steckdosen für elektrische Energie von jedem autorisierten Benutzer verbrauchten Energie, wobei die Meßgeräte (75) von außerhalb des Körpers ablesbar sind; wobei die Steckdosen (76) für elektrische Energie, die Energie-Verteilungsmittel (71, 72) und die elektrischen Meßgeräte (75) vollständig innerhalb des hohlen Körpers angeordnet sind; durch eine Mehrzahl von Öffnungen in dem hohlen Körper, wobei jede Öffnung zumindest einer Steckdose für elektrische Energie zugeordnet und jede Steckdose durch eine Öffnung zugänglich sind; durch verriegelbare Zugangstür-Mittel (86) zum verriegelnden Sichern jeder Öffnung, wobei zumindest eines der Zugangstür-Mittel nur durch einen autorisierten Benutzer zu öffnen ist, so daß der Benutzer durch die Tür Zugang zu zumindest einer dahinter angeordneten Steckdose für elektrische Energie hat.

2. Versorgungseinheit nach Anspruch 1, dadurch gekennzeichnet, daß das verriegelbare Zugangstür-Mittel (86) zum verriegelnden Sichern jedes Öffnungsmittels im verriegelten Zustand ein elektrisches Lösen einer mit dem elektrischen Energieauslaß (76) verbundenen elektrischen Leitung verhindert.

3. Versorgungseinheit nach Anspruch 1, dadurch gekennzeichnet, daß das verriegelbare Zugangstür-Mittel (86) zum verriegelnden Sichern des Öffnungsmittels in einer gesicherten Position das Entfernen einer mit dem elektrischen Auslaß verbundenen elektrischen Energieschnur bzw. -leitung von der Versorgungseinheit verhindert.

4. Versorgungseinheit nach irgendeinem vorhergehenden Anspruch, gekennzeichnet durch eine Mehrzahl von Versorgungsauslaß-Mitteln (76a) zum Verteilen zusätzlicher Versorgungen von Versorgungsquellen (61a) zu abnehmbaren Versorgungsleitungen, die an das Versorgungsauslaß-Mittel (76a) anschließbar und hiervon lösbar sind, wobei die Versorgungsauslaß-Mittel (76a) vollständig innerhalb des hohlen Körpers angeordnet und durch das verriegelbare Zugangstür-Mittel durch autorisierte Benutzer zugänglich ist.

5. Versorgungseinheit nach irgendeinem der vorhergehenden Ansprüche, gekennzeichnet durch einen in dem hohlen Körper angeordneten abnehmbaren Rahmen, wobei die Energieverteilungsmittel und die elektrischen Meßgeräte an dem Rahmen angebracht und hiermit entfernbar sind.

6. Versorgungseinheit nach Anspruch 5, dadurch gekennzeichnet, daß die Versorgungseinheit Kappen-Mittel (79) zum Verschließen der Oberseite des hohlen Körpers enthält, wobei das Kappen-Mittel (79) von dem hohlen Körper abnehmbar ist und der Rahmen bei abgenommener Kappe durch eine in dem hohlen Körper ausgebildete Öffnung entfernbar ist.

7. Versorgungseinheit nach Anspruch 5 oder 6, dadurch gekennzeichnet, daß der Rahmen ferner die Steckdosen für elektrische Energie und die Trennschalter trägt.

8. Versorgungseinheit nach irgendeinem der vorhergehenden Ansprüche, gekennzeichnet durch transparente Fenster in dem hohlen Körper, wobei die Meßgeräte durch die Fenster ablesbar sind.

9. Versorgungseinheit nach irgendeinem der vorhergehenden Ansprüche, dadurch gekennzeichnet, daß das Anbringungsmittel zerbrechliche Anbringungs- bzw. Halterungsmittel aufweist.

10. Versorgungseinheit nach Anspruch 9, dadurch gekennzeichnet, daß das zerbrechliche Anbringungsmittel (63) einen Anbringungs bzw. Halterungssockel mit zerbrechlichen Ansätzen bzw. Augen (42) aufweist.

11. Versorgungseinheit nach Anspruch 9, dadurch gekennzeichnet, daß das zerbrechliche Anbringungs- bzw. Halterungsmittel zerbrechliche Anbringungsschrauben bzw. -bolzen aufweist.

12. Versorgungseinheit nach irgendeinem der vorhergehenden Ansprüche, dadurch gekennzeichnet, daß das verriegelbare Zugangstür-Mittel (86) eine schlüsselbetätigte Verriegelung enthält.

13. Versorgungseinheit nach irgendeinem der vorhergehenden Ansprüche, dadurch gekennzeichnet, daß eine Mehrzahl elektrischer Energie-Auslässe hinter jedem der verriegelbaren Zugangstür-Mittel (86) angeordnet ist.

14. Versorgungseinheit nach irgendeinem der vorhergehenden Ansprüche, ferner gekennzeichnet durch zumindest einen Wasserauflaß-Hahn (66), der an dem Äußeren des hohlen Körpers angebracht und mit einer Wasserversorgungsleitung (62) verbunden ist, die sich von einer äußeren Wasserversorgung in den hohlen Körper erstreckt.

15. Versorgungseinheit nach irgendeinem der vorhergehenden Ansprüche, ferner gekennzeichnet durch in dem oberen Abschnitt des hohlen Körpers angebrachte Beleuchtungsmittel (78) zum Bilden von im wesentlichen abwärts gerichtetem Licht für eine externe Beleuchtung und eine Beleuchtung des Innenraums der Versorgungseinheit.

16. Versorgungseinheit nach irgendeinem der vorhergehenden Ansprüche, dadurch gekennzeichnet, daß die Einheit sowohl elektrische Versorgungen wie auch zumindest eine andere Versorgung vorsieht, die aus der Gruppe bestehend aus Telefon-Versorgung und Kommunikation-Antennen-Versorgung (communications antenna service) ausgewählt ist.

17. Versorgungseinheit nach irgendeinem der vorhergehenden Ansprüche, ferner gekennzeichnet durch münzenbetätigte Mittel zum Steuern zumindest einer Versorgung, die von der Versorgungseinheit durch Zuführen von Münzen zu dem münzenbetätigten Mittel verteilt wird.

FIG.1

FIG. 2

FIG. 3

FIG. 4

FIG. 5

FIG. 6

FIG. 7

FIG. 8